# EUROPEAN PATENT APPLICATION

(11) **EP 1 072 296 A2**
(43) Date of publication of application: **31.01.2001**
(21) Application number: 00202650.8
(22) Date of filing: 25.07.2000
(51) Int. Cl.: A63F 13/00

(54) **Video game**

(30) Priority: 28.07.1999 GB 9917604
(71) Applicant: Big Fish Entertainment Limited, Solihull, West Midlands B92 0JD (GB)
(72) Inventor: Hillman, Mark, Solihull B92 0JD (GB)
(74) Representative: Watts, Peter Graham

(57) **Abstract**

A video game comprises a video display (10) which displays an area marked out in the form of a pitch (12) with goal areas (14) at either end, the video monitor displays a plurality of groups of players (20,22,24,26) for each side, the groups of players (20,22,24,26) being located at different locations longitudinally of the pitch (12), a multi-direction control (30,32,34,36) being provided for each group of players (20,22,24,26), movement of the control means (30,32,34,36) in a first direction causing the group of players (20,22,24,26) to move transversely of the pitch (12), the display unit (10) also displaying a ball (40), the direction of movement of the ball (40) on the display unit (10) being controlled by movement of the control means (30,32,34,36) in a second direction, when a player in the group (20,22,24,26) controlled by that control means (30,32,24,36) intercepts the ball (40).

## Description

The present invention relates to a video game and in particular to a video game which simulates table football or table hockey.

In table football, the players are mounted on rods which are located for rotational and axial movement, transversely of a playing area. Normally four rods are provided for each side, the rods being controlled by one or two people on each side of the playing area.

The first and second rods of either side are located adjacent one of the ends of the playing area. A third rod on either side is located between the third and fourth rods on the other side and the fourth rod on either side is located between the second and third rods on the other side.

The playing area is defined by four walls, the end walls of the playing area having apertures defining goals, which are located centrally of the end walls.

The players are mounted on the rods in groups, a single player (the goalkeeper) being mounted on the first rod; two players (defenders) being mounted on the second rod, five players (mid-field players) being mounted on the third rod and three players (attackers) being mounted on the fourth rod. The players are mounted on the rods so that, when the rods are centred with respect to the playing area, the players will be spaced evenly across the playing area. The players on each rod may be moved transversely of the playing area by axial movement of the rods.

A ball is introduced into the playing area centrally thereof. The players may be manoeuvred by axial movement of the rods in order to intercept the path of the ball and the ball may be propelled longitudinally of the playing area by rotation of the rods. Moreover, by suitable manipulation of the rods, the ball may be trapped by a player, the ball may be passed laterally between players on the same rod or the ball may be passed at an angle or longitudinally between players on different rods.

The object of the game is to shoot the ball into the opponents goal while, of course, the opponent's aim is to prevent this.

While table football games of this type are very popular, there are certain problems with the game which detract from the enjoyment that may be experienced.

In particular, the game requires at least two players, a single person cannot play the game alone. It is also necessary to level the playing area so that one side does not have an advantage and moreover, the motion of the ball may also be influenced intentionally or unintentionally by motion of the playing area. Problems are also experienced in introducing the ball at the beginning of the game or after a goal has been scored, so that it is fair to both sides. It is also possible for the ball to come to rest in an area where it is out of reach from the players of both sides.

In accordance with the present invention, a video game comprises a video monitor which defines a playing area having a goal at each end, characterised in that the video monitor displays a plurality of groups of players for each side, the groups of players being located at different locations longitudinally of the playing area, a multi-directional control means being provided for the control of each group of players respectively, movement of the control means in a first direction causing the group of players to move transverse to the playing area, the video monitor also displaying a ball, the direction of movement of the ball on the video monitor being controlled by movement of the control means in a second direction, when a player in the group controlled by that control means intercepts the ball.

A video game in accordance with the present invention may be played in similar manner to conventional table football, the control means being used to control the players laterally to intercept the path of the ball and to propel the ball longitudinally of the playing area.

As with the conventional game, the player may trap the ball, or by suitable positioning of the ball relative to the player, may propel the ball in any direction. As the control means are not restricted to movement in two directions, additional directional control of the ball may be achieved by diagonal movement of the control means.

The video game in accordance with the invention is not of course affected by the level of the playing area or movement thereof. Moreover, movement of the ball may be controlled at the start of the game and restarting after a goal.

Furthermore, the video game of the present invention may be adapted to be played by a single player, the other side being played automatically under computer control.

A further advantage of the present invention over the conventional game, is that the player formation may be varied. For example, rather than playing a conventional one-two-five-three formation, a one-two-four-four or a one-two-three-five formation or any other suitable formation could be selected. Moreover, the speed of the game can be controlled and other factors could be introduced, for example pitch and weather conditions which may influence the motion of the ball. In accordance with a further embodiment of the present invention, refereeing decisions may be imposed by the central processing unit, by which one of the teams may be penalised by the imposition of a free kick, penalty or the sending off of a player. For a free kick, the opponent's players nearest the ball would be removed, while for a penalty only the goalkeeper would remain between the opposing attackers and goal.

The multi-directional control means of the present invention may be in the form of a track ball, whereby rolling of the track ball will permit movement in directions through 360°. Alternatively joysticks would be used for the multi-directional control means. In a preferred embodiment of the invention, the video monitor will also provide an electronic scoreboard and a clock to indicate the time elapsed or left in the game. There may also be the facility to name the teams so that the names are displayed on the scoreboard. Team colours may also be selected from a range of options.

It would also be possible to interconnect two or more video games of the form disclosed herein, via the Internet or other suitable connection, so that the opponents may be at remote locations.

The video game in accordance with the present invention may also provide the option of replaying passages of play, for example the scoring of a goal. Statistics of the game, for example shots on target, free kicks etc may also be displayed.

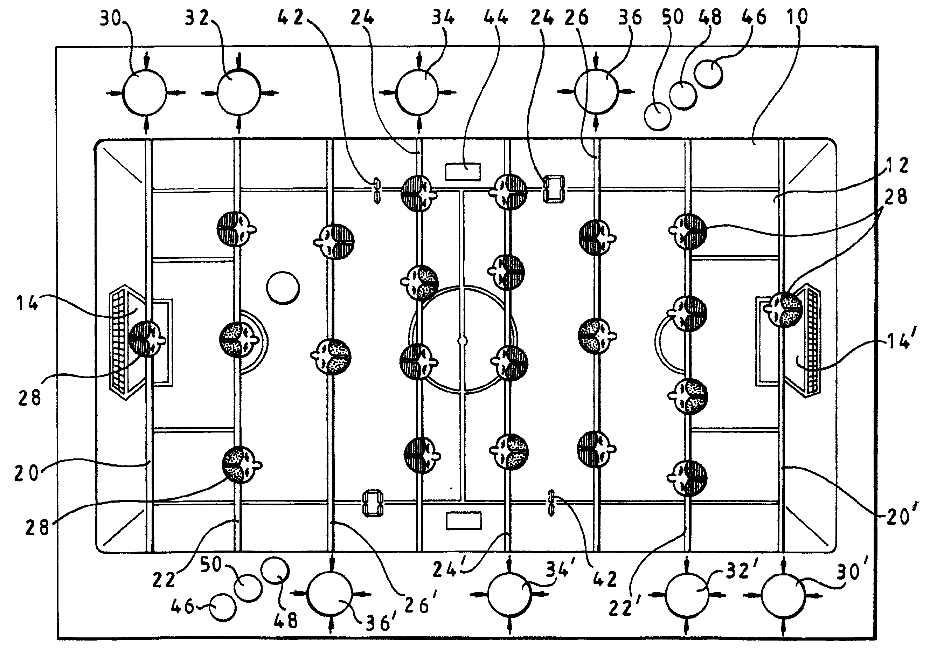

An embodiment of the invention is now disclosed by way of example only, with reference to the accompanying drawing, which illustrates, in plan view, a video game in accordance with the present invention.

As illustrated in the accompanying drawing, a video display 10 displays a playing area marked out in the form of a football pitch 12 with goal areas 14 at either end.

Each side has four groups of players 20,22,24,26, arranged in straight lines transversely across the pitch 12. The groups 20 and 22 of one side are located at the end adjacent goal 14, while groups 20' and 22' of the other side are located adjacent goal 14'. Group 24 of the one side is located between groups 26' and 24' of the other side and group 26 of the one side are located between groups 24' and 22' of the other side. The group 20 of each side comprises a single player 28 (the goalkeeper) which may be located centrally of the goal area 14. The other groups 22, 24, 26 on each side have a number of players 28 which may be selected at the discretion of the person controlling that side. For example, as illustrated, on one side group 22 has three players, group 24, four players and group 26 three players, whilst on the other side, group 22' has four players, group 24' has four players and group 26' two players. The players in groups 22 to 26 are located at equal intervals across the pitch 12.

Track balls 30, 32, 34 and 36 are provided along each side of the pitch 12, to control groups 20, 22, 24 and 26 respectively.

The track balls 30, 32, 34, 36 may be moved in a direction transverse to the pitch 12, to move the players in the associated group transversely of the pitch 12.

A ball 40 is displayed by the display unit 10.

The display unit 10 also has areas 42 which displays the score and 44 which displays the time remaining in the match.

Further control buttons 46, 48, 50 are provided to select various playing options for the game.

At the start of the game, the ball is positioned adjacent one of the groups 24, 24' of players 28 so that one side can kick off. The players 28 may then be moved transversely of the pitch 12 by means of track balls 30, 32, 34, 36 to intercept the path of the ball. The player 28 may then trap the ball 40 or, by movement of the track ball 30, 32, 34, 36 in a direction longitudinally of the pitch 12, may propel the ball 40. By suitable positioning of the player 28 relative to the ball 40, the ball 40 may also be propelled diagonally of the pitch 12. Moreover, movement of the track ball 30, 32, 34, 36 in a direction intermediate of the transverse and longitudinal directions of the pitch, may also direct the motion of the ball 40.

Various modifications may be made without departing from the invention. For example, while in the above embodiments track balls 30, 32, 34, 36 are used to control transverse movement of the players and the direction in which the ball is propelled, other multi-directional control means, for example joysticks, may alternatively be used. Moreover, while the embodiment disclosed above simulates football, other games in which players intercept and propel a ball, for example hockey, may also be simulated.

## Claims

1. A video game comprising a video monitor (10) which defines a playing area (12) having a goal (14) at each end, characterised in that the video monitor (10) displays a plurality of groups of players (20,22,24,26) for each side, the groups of players (20,22,24,26) being located at different locations longitudinally of the playing area (12), a multi-directional control means (30,32,34,36) being provided for control of each group of players (20,22,24,26) respectively, movement of the control means (30,32,34,36) in the first direction causing the group of players (20,22,24,26) to move transverse to the playing area (12), the video monitor (10) also displaying a ball (40), the direction of movement of the ball (40) on the video monitor (10) being controlled by movement of the control means (30,32,34,36) in a second direction, when a player in the group (20,22,24,26) controlled by that control means (30,32,34,36) intercepts the ball (40).

2. A video game according to claim 1 characterised in that the number of players at each longitudinal location may be varied, the number of players on each side totalling 11.

3. A video game according to claim 1 or 2 characterised in that the speed of movement of the ball (40) is controlled to simulate different playing conditions.

4. A video game according to any one of the preceding claims characterised in that the course of the game may be controlled in accordance with 'refereeing decisions'.

5. A video game according to claim 4 characterised in that the ball (40) may be positioned for a penalty or free kick.

6. A video game according to claim 4 or 5 characterised in that the number of players on one or both sides may be reduced.

7. A video game according to any one of the preceding claims characterised in that the multi-directional control means (30,32,34,36) is in the form of a track ball, whereby rolling of the ball will permit movement in directions through 360°.

8. A video game according to claim 7 characterised in that the direction of movement of the ball (40) is influenced by the direction of movement of the track ball (30,32,34,36) relative to the transverse and longitudinal directions of the playing area 12.

9. A video game according to any one of the preceding claims characterised in that an electronic scoreboard (42) is provided.

10. A video game according to any one of the preceding claims characterised in that a clock (44) is provided.

11. A video game according to any one of the preceding claims characterised in that means is included to connect one said video game with another said video game so that opponents may be at remote locations.

12. A video game according to any one of the preceding claims characterised in that means is included for replaying passages of play.
